# EUROPÄISCHE PATENTANMELDUNG

(11) **EP 1 382 935 A1**
(43) Veröffentlichungstag der Anmeldung: **21.01.2004**
(21) Anmeldenummer: 03012493.7
(22) Anmeldetag: 02.06.2003
(51) Int. Cl.: G01B 7/30, G01D 5/16

(54) **Redundanter Drehwinkelsensor mit zwei magnetoresistiven Sensorelementen**

(30) Priorität: 19.07.2002 DE 10233080
(71) Anmelder: Fernsteuergeräte Kurt Oelsch GmbH, 12347 Berlin (DE)
(72) Erfinder: Donner, Uwe, 12524 Berlin (DE)
(74) Vertreter: Weisse, Renate Dr.

(57) **Zusammenfassung**

Die Efindung betrifft eine Sensoreinrichtung zum Erfassen der Winkellage eines drehbaren Teils (10). Die Sensoreinrichtung enthält einen Permanentmagneten (12), welcher an dem drehbaren Teil (10) befestigt wird. Zwei magnetoresistive Sensoren (14,16) sprechen auf die Richtung des Magnetfeldes des Permanentmagneten (12) an und sind in einem Gehäuse (22) aus Aluminium angeordnet. Durch zwei Signalauswerteeinheiten (24,26) werden die Signale der Sensors (14,16) ausgewertet. Die Signalauswerteeinheiten (24,26) liefern Winkellagesignale, welche in einer Vergleichsschaltung (28) miteinander verglichen werden. Hierdurch können Fehler des Systems erkannt werden.

## Beschreibung

### Technisches Gebiet

Die Erfindung betrifft eine Sensoreinrichtung zum Erfassen der Winkellage eines drehbaren Teils, enthaltend magnetfelderzeugende Mittel, welche an dem drehbaren Teil befestigbar sind zur Erzeugung eines Magnetfeldes, das Feldlinien erzeugt, die in einer die Umlaufachse des Teils enthaltenden Ebene und im wesentlichen symmetrisch zu der Umlaufachse verlaufen, und einen auf der Umlaufachse angeordneten magnetoresistiven Sensor mit um die Umlaufachse gegeneinander winkelversetzten, in einer Brückenanordnung geschalteten magnetoresistiven Sensorelementen, wobei die Brückenanordnung ein Ausgangssignal nach Maßgabe der Richtung des Magnetfeldes liefert.

### Zugrundeliegender Stand der Technik

Sensoreinrichtungen zum Erfassen der Winkellage eines drehbaren Teils unter Verwendung von magentfelderzeugenden Mittel und eines auf die Richtung des Magnetfeldes ansprechenden Sensors sind in vielen verschiedenen Ausführungen bekannt. Eine solche Sensoreinrichtung ist dem Aufsatz "Magnetoresistive Sensorsysteme für Automobilanwendungen am Beispiel eines integrierten Winkelmeßsystems" von Dr. Klaus Dietmayer (http://www.etech.fhhamburg.de/tb/tb31/dietmay.pdf) bekannt. An einer Stirnseite einer rotierenden Welle ist ein Permanentmagnet befestigt, welcher sich mit der Welle dreht. Gegenüber dem Permanentmagneten ist ein magnetoresistiver Sensor an einer Leiterplatte angeordnet. Der magnetoresistive Sensor enthält ferromagnetisches Material, dessen elektrischer Widerstand sich in Abhängigkeit von der Richtung des Magnetfeldes des Permanentmagneten ändert (magnetoresistiver Effekt). Dies wird zur Messung der Winkellage des Permanentmagneten und damit auch der Winkellage der Welle ausgenutzt. In einer nachgeschalteten Auswerteelektronik werden die elektrische Ausgangssignale des Sensors weiterverarbeitet und ausgewertet, so dass die Auswerteelektonik ein Signal als Maß für die Winkellage der Welle liefert.

### Offenbarung der Erfindung

In manchen Anwendungsfelder werden hohe Anforderungen an die Zuverlässigkeit der Sensoreinrichtungen gestellt, die von den bekannten Sensoreinrichtungen nicht hinreichend erfüllt werden können.

Der Erfindung liegt die Aufgabe zugrunde, eine Sensoreinrichtung der eingangs genannten Art zu schaffen, bei welchem die Zuverlässigkeit erhöht ist.

Erfindungsgemäß wird diese Aufgabe dadurch gelöst, daß ein zweite, in gleicher Weise aufgebauten Sensor vorgesehen ist, welcher ein zweites Ausgangssignal nach Maßgabe der Richtung des Magnetfeldes liefert, der zweite Sensor gleichachsig zu dem ersten Sensor aber axial gegen diesen versetzt auf der Umlaufachse angeordnet ist und die Signale des ersten und des zweiten Sensors auf eine Vergleichsschaltung aufgeschaltet sind, welche die Signale des ersten Sensors und des zweiten Sensors miteinander vergleicht.

Es werden somit zwei voneinander unabhängige Winkelsignale von zwei verschiedenen Sensoren der in vorstehend genannter Veröffentlichung erwähnten Art erzeugt. Beide Winkelsignale sind in eindeutiger Weise von der Winkellage des drehbaren Teils abhängig. Durch einen Vergleich der so erhaltenen Winkelsignale können durch die Vergleichsschaltung Fehler des Systems erkannt werden. Diese Redundanz kann die Zuverlässigkeit der Sensoreinrichtung wesentlich erhöhen und beispielsweise zur Kontrolle der einwandfreien Funktion dienen, so daß eine sehr sichere Funktion der Sensoreinrichtung gewährleistet werden kann.

Die genaue Erzeugung der Winkelsignale setzt voraus, daß jeder Sensor exakt zu der Umlauf- oder Drehachse des Teils ausgerichtet ist. Der Vergleich der redundanten Signale setzt voraus, daß bei jeder Winkelstellung die Sensoren -im Normalfall- gleiche Signale liefern. Nach der Erfindung sind die beiden Sensoren axial gegeneinander versetzt koaxial, also beide symmetrisch zu der Umlauf- oder Drehachse ausgerichtet, angeordnet. Die beiden Sensoren sind dadurch von unterschiedlichen Feldstärken beaufschlagt. Die Winkelsignale der vorliegenden Sensoren sind jedoch unabhängig vom Absolutbetrag der magnetischen Feldstärke nur von der Richtung der Feldlinien, also von der Winkelstellung des drehbaren Teils abhängig. Dadurch wird ein Vergleich der Winkelsignale auch bei dem aus geometrischen Gründen notwendigen axialen Versatz der Sensoren möglich. Es ist auch nicht notwendig, etwa zwei magnetfelderzeugende Mittel an gegenüberliegenden Stirnseiten des Teils mit je einem Sensor in übereinstimmender Geometrie für beide Sensoren vorzusehen, was aufwendig wäre und wieder zu Fehlern führen könnte. Vielmehr kann eine einzige kompakte Sensoranordnung mit zwei Sensoren in Zusammenwirken mit einem einzigen Magneten vorgesehen werden.

Vorzugsweise enthalten die magnetfelderzeugende Mittel einen oder mehrere Permanentmagnete oder bestehen aus solchen.

Eine sehr kompakte Ausbildung der Sensoreinheit ergibt sich jedoch der erste und der zweite Sensor auf einem gemeinsamen Träger angeordnet sind. In einem bevorzugten Ausführungsform sind die beiden Sensoren dann auf gegenüberliegenden Seiten des Trägers angeordnet. Wenn dieser Träger eine Leiterplatte ist, können die Sensoren direkt an dieser Leiterplatte kontaktiert werden.

Die bei der vorliegenden Erfindung verwendete Sensoren können handelsübliche Sensoren sein, wie sie beispielsweise von der Firma Philips erhältlich und in dem oben erwähnten Artikel beschrieben sind.

Vorzugsweise sind die Sensoren in einem gemeinsamen Gehäuse angeordnet. Wenn es sich dabei um ein geschlossenes Gehäuse handelt, muss gewährleistet sein, dass das Magnetfeld der magnetfelderzeugenden Mittel durch das Gehäuse hindurchdringen kann, damit die Sensoren darauf ansprechen können. Die wird dadurch erreicht, dass das Gehäuse zumindest teilweise aus nicht-magnetisierbarem Material, z.B. Aluminium besteht.

Ein Ausführungsbeispiel der Erfindung ist nachstehend unter Bezugnahme auf die zugehörigen Zeichnungen näher erläutert.

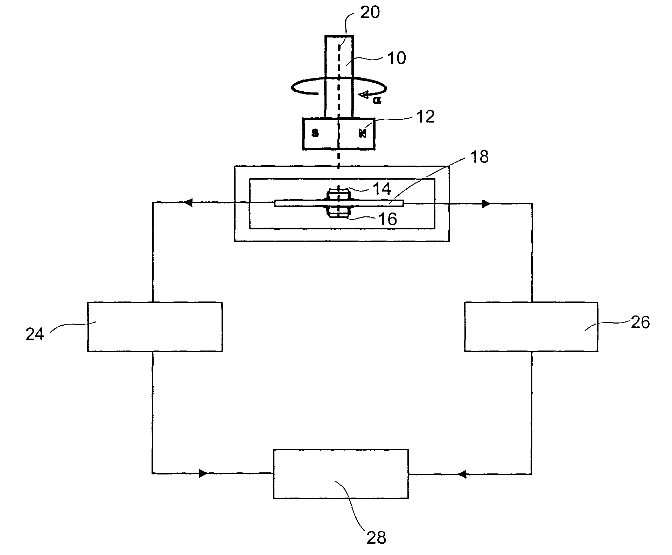

### Kurze Beschreibung der Zeichnung

Die einzige Figur ist eine schematische Darstellung und zeigt eine Sensoreinrichtung zum Erfassen der Winkellage einer drehbaren Welle.

### Bevorzugte Ausführung der Erfindung

In der Figur ist mit 10 eine Welle bezeichnet, deren Winkellage a durch eine Sensoreinrichtung erfasst werden soll.

Die Sensoreinrichtung enthält einen Permanentmagneten 12, welche an der in der Figur unteren Stirnseite der Welle 10 befestigt ist, sowie einen ersten und einen zweiten magnetoresistiven Sensor 14 bzw. 16. In dem dargestellten Ausführungsbeispiel sind die beiden Sensoren 14 und 16 identisch ausgebildete, handelsübliche magnetoresistive Sensoren, welche berührungslos arbeiten. Die beiden Sensoren 14 und 16 sind auf gegenüberliegenden Seiten einer Leiterplatte 18 angeordnet. Dabei sind die Sensoren 14 und 16 so angeordnet, dass sie sich auf einer mit der Achse 20 der Welle 10 zusammenfallenden Linie befinden, d.h. der erste Sensor 14 befindet sich zwischen dem Permanentmagneten 12 und dem zweiten Sensor 16. Die Leiterplatte 16 mit den beiden Sensoren 14 und 16 ist fest in einem Gehäuse 22 aus Aluminium angeordnet.

Der erste Sensor 14 ist mit einer ersten Signalauswerteeinheit 24 zum Auswerten der Signale des ersten Sensors 14 verbunden. Der zweite Sensor 16 ist mit einer zweiten Signalauswerteeinheit 26 zum Auswerten der Signale des zweiten Sensors 16 verbunden. Mit 28 ist eine Vergleichsschaltung bezeichnet, welche mit Ausgängen der beiden Signalauswerteeinheiten 24 und 26 verbunden ist. Die Vergleichsschaltung 28 weist (nicht gezeigte) Ausgänge auf, an welchen Ausgangssignale der Vergleichsschaltung 28 abgegriffen werden können.

### Der beschriebene Sensoreinrichtung arbeitet wie folgt:

Wenn die Welle 10 gedreht wird, dann dreht sich auch der drehfest mit der Welle verbundene Permanentmagnet 12 in gleicher Weise. Damit ändert sich die Magnetfeldrichtung des Permanentmagneten 12. Dies löst in bekannter Weise (magnetoresistiver Effekt) eine Änderung des elektrischen Widerstandes in den magnetoresistiven Sensoren 14 und 16 aus. Diese Änderung des elektrischen Widerstandes bewirkt ebenfalls in bekannter Weise eine Änderung der Ausgangssignale der Sensoren 14 und 16. In den beiden Signalauswerteeinheiten 24 und 26 können diese Signale dann ausgewertet und beispielsweise zur Anzeige der Winkellage der Welle 10 verwendet werden. Diese Winkellagesignale werden der Vergleichsschaltung 28 zugeführt und dort miteinander verglichen. Sollte in der Vergleichsschaltung 28 eine unzulässig hohe Abweichung der beiden Winkellagesignale voneinander festgestellt werden, wird dies durch ein entsprechendes Ausgangssignal der Vergleichsschaltung 28 angezeigt. Dieses Ausgangssignal kann dann für geeignete Maßnahmen verwendet werden, beispielsweise um anzuzeigen, dass die Sensoreinrichtung nicht einwandfrei arbeitet.

## Patentansprüche

1. Sensoreinrichtung zum Erfassen der Winkellage eines drehbaren Teils (10), enthaltend
(a) magnetfelderzeugende Mittel (12), welche an dem drehbaren Teil (10) befestigbar sind zur Erzeugung eines Magnetfeldes, das Feldlinien erzeugt, die in einer die Umlaufachse enthaltenden Ebene und im wesentlichen symmetrisch zu der Umlaufachse verlaufen,
(b) einen auf der Umlaufachse angeordneten magnetoresistiven Sensor (14) mit um die Umlaufachse gegeneinander winkelversetzten, in einer Brückenanordnung geschalteten magnetoresistiven Sensorelementen, wobei die Brückenanordnung ein Ausgangssignal nach Maßgabe der Richtung des Magnetfeldes liefert,
**dadurch gekennzeichnet, daß**
(c) ein zweite, in gleicher Weise aufgebauten Sensor (16) vorgesehen ist, welcher ein zweites Ausgangssignal nach Maßgabe der Richtung des Magnetfeldes liefert,
(d) der zweite Sensor gleichachsig zu dem ersten Sensor auf der Umlaufachse angeordnet ist und
(e) die Signale des ersten und des zweiten Sensors auf eine Vergleichsschaltung (28) aufgeschaltet sind, welche die Signale des ersten Sensors (14) und des zweiten Sensors (16) miteinander vergleicht.

2. Sensoreinrichtung nach Anspruch 1, **dadurch gekennzeichnet, daß** die magnetfelderzeugende Mittel einen oder mehrere Permanentmagnete (12) enthalten.

3. Sensoreinrichtung nach Anspruch 1 oder 2, **dadurch gekennzeichnet, daß** der erste und der zweite Sensor (14,16) auf einem gemeinsamen Träger (18) auf gegenüberliegenden Seite des Trägers (118) angeordnet sind.

4. Sensoreinrichtung nach einem der Ansprüche 1-3, **dadurch gekennzeichnet, daß** der Träger eine Leiterplatte (18) ist.

5. Sensoreinrichtung nach einem der Ansprüche 1-4, **dadurch gekennzeichnet, daß** der erste und/oder der zweite Sensor (14,16) in einem gemeinsamen Gehäuse (22) angeordnet sind.

6. Sensoreinrichtung nach Anspruch 5, **dadurch gekennzeichnet, daß** das Gehäuse (22) zumindest teilweise aus nicht-magnetisierbarem Material besteht.

7. Sensoreinrichtung nach Anspruch 6, **dadurch gekennzeichnet, daß** das nichtmagnetisierbare Material Aluminium ist.
